# EUROPÄISCHE PATENTANMELDUNG

(11) **EP 1 850 197 A1**
(43) Veröffentlichungstag der Anmeldung: **31.10.2007**
(21) Anmeldenummer: 06008419.1
(22) Anmeldetag: 24.04.2006
(51) Int. Cl.: G05B 19/05

(54) **Automatisierungsgerät und Verfahren zum Zugriff auf eine darauf installierte Anwendersoftware**

(71) Anmelder: SIEMENS AKTIENGESELLSCHAFT, 80333 München (DE)
(72) Erfinder: Krämer, Manfred, 90530 Wendelstein (DE); Lange, Ronald, 90766 Fürth (DE); Menzl, Franz-Josef, 91171 Greding (DE); Meusser, Klaus, 90768 Fürth (DE); Nitzsche, Stefan, 67227 Frankenthal (DE)

(57) **Zusammenfassung**

Die Erfindung betrifft ein Automatisierungsgerät (1) und Verfahren zum Zugriff auf eine auf dem Automatisierungsgerät (1) installierte Anwendersoftware (2) mittels eines Clientcomputers (4). Um Anwenderzugriffe auf die Anwendersoftware (2) aufwandsarm über ein IP Verbindung (5) zu ermöglichen wird vorgeschlagen, dass das Automatisierungsgerät (1)
- einen ersten Speicherbereich für mindestens eine Anwendersoftware (2),
- eine IP Schnittstelle (3) zum Anschluss mindestens eines Clientcomputers (4) an das Automatisierungsgerät (1) über eine IP Verbindung (5) und
- einen zweiten Speicherbereich für eine Terminalprotokollsoftware (6), durch die die mindestens eine Anwendersoftware (2) von einem Anwender mittels des Clientcomputers (4) zugreifbar ist

aufweist.

## Beschreibung

Die Erfindung betrifft ein Automatisierungsgerät und Verfahren zum Zugriff auf eine auf dem Automatisierungsgerät installierte Anwendersoftware mittels eines Clientcomputers.

Automatisierungsgeräte, insbesondere Speicherprogrammierbare Steuerungen (SPS), müssen für ihren Einsatz im Allgemeinen zunächst projektiert, programmiert und konfiguriert werden. Diese Tätigkeiten werden häufig, wie auch im vorliegenden Dokument, unter dem Begriff Projektierung zusammengefasst. Für die Projektierung stehen einem Projekteur Projektierungstools zur Verfügung, wobei diese Softwareprogramme in der Regel auf zusätzlichen, mit dem Automatisierungsgerät verbindbaren Programmiergeräten installiert sind.

Während des Betriebes eines Automatisierungssystem kann ein Anwender zu Bedien- und Beobachtungszwecken, zur Diagnose und Kalibrierung etc... auf Daten des Automatisierungssystems zugreifen, die von einem Automatisierungsgerät, beispielsweise einer SPS, verwaltet werden. Beispiele für derartige Daten sind Zustandswerte eines Automatisierungsprozesses oder des zur Durchführung des Automatisierungsprozesses vorgesehenen Automatisierungssystems. Für den Anwenderzugriff werden in der Regel so genannte HMI-Panels (HMI= Human-Machine-Interface) oder ein an das Automatisierungssystem angeschlossener PC verwendet, wobei eine entsprechende Visualisierungssoftware auf dem HMI-Panel bzw. dem PC installiert ist.

Aus DE 199 29 933 C2 ist ein Verfahren zur Kommunikation zwischen einer Datenverarbeitungsvorrichtung und einem Automatisierungsgerät bekannt, bei dem in einem Speicher des Automatisierungsgeräts gespeicherte Kommunikationsdaten vom Automatisierungsgerät zur Datenverarbeitungsvorrichtung übertragen und dort zur Kommunikation mit einem Kommunikationsprogramm ausgeführt werden.

Weiterhin ist bekannt, die zur Projektierung und/oder zur Visualisierung benötigte Anwendersoftware direkt auf dem Automatisierungsgerät laufen zu lassen und zum Zugriff auf diese Software benötigte Ein- oder Ausgabegeräte wie Bildschirm, Tastatur, Mouse etc... direkt an das Automatisierungsgerät anzuschließen. Beispielsweise wird ein derartiges Automatisierungsgerät mit einer VGA Schnittstelle zum Anschluss eines Monitors ausgeführt.

Darüber hinaus ist beispielsweise aus DE 102004045240 A1 bekannt, Webtechnologien wie HTTP in der Automatisierungswelt zur Kommunikation mit einem Automatisi'erungsgerät via Internet oder Intranet einzusetzen. Hierbei werden die Automatisierungsgeräte bzw. die Steuerungen mit einem Webserver ausgeführt, der mit einem Webbrowser wie beispielsweise dem Microsoft Internet Explorer oder Netscape darstellbare Webinhalte auf Basis der von der Projektierungs- bzw. Visualisierungssoftware erzeugten Daten generiert. Auf diese Weise ist es möglich, mit einem Remote Client via Internet oder Intranet mit dem Automatisierungsgerät bzw. der Steuerung des Automatisierungsgerätes zu kommunizieren um beispielsweise Anlagen- und Prozesswerte mittels des Webbrowsers zu überwachen.

Der Erfindung liegt die Aufgabe zu Grunde, Anwenderzugriffe auf eine auf einem Automatisierungsgerät installierte Anwendersoftware aufwandsarm über ein IP Verbindung zu ermöglichen.

Diese Aufgabe wird durch ein Automatisierungsgerät gelöst mit
- einem ersten Speicherbereich für mindestens eine Anwendersoftware,
- einer IP Schnittstelle zum Anschluss mindestens eines Clientcomputers an das Automatisierungsgerät über eine IP Verbindung und
- einem zweiten Speicherbereich für eine Terminalprotokollsoftware, durch die die mindestens eine Anwendersoftware von einem Anwender mittels des Clientcomputers zugreifbar ist.

Darüber hinaus wird die Aufgabe durch ein Verfahren gelöst zum Zugriff auf eine auf einem Automatisierungsgerät gespeicherte Anwendersoftware mittels eines an eine IP Schnittstelle des Automatisierungsgerätes angeschlossenen Clientcomputers, bei dem ein Anwender unter Verwendung einer auf dem Automatisierungsgerät installierten Terminalsoftware und einer auf dem Client installierten weiteren Terminalsoftware auf die Anwendersoftware zugreift.

Weitere vorteilhafte Ausführungsformen sind in den Unteransprüchen angegeben.

Mit der Erfindung wird auf erstaunlich einfacher Art und Weise erreicht, dass die Anwendersoftware auf dem Automatisierungsgerät gespeichert werden kann und dort auch abläuft, wobei mit dem an die IP Schnittstelle des Automatisierungsgerätes angeschlossenen Clientcomputers auf diese Software zugegriffen werden kann. Die Verlagerung der Anwendersoftware auf das Automatisierungsgerät hat den Vorteil, dass der beispielsweise zu Bedien- und Beobachtungszwecken oder für Projektierungsaufgaben vorgesehene Clientcomputer nicht über die hierfür benötigte Software verfügen muss. Er kann also im Sinne eines so genannten Thin Client aufgebaut sein, der lediglich für die Leistungen der Anzeige/Eingabe ausgestattet ist. Dies ist insbesondere bei Anlagen (z.B. Kläranlagen, Windkraftwerke, etc.) von Vorteil, bei denen eine Anzeige-/Eingabevorrichtung vor Ort meist nicht vorhanden ist. Im Bedarfsfall wird ein solches Gerät von einem Servicetechniker mitgebracht und über die IP Schnittstelle an das Automatisierungsgerät angeschlossen.

Mit Hilfe der im zweiten Speicherbereich abgelegten Terminalprotokollsoftware kann der Anwender auf die Anwendersoftware mittels des Clientcomputers, der hierbei nur die Funktion eines Terminals hat, zugreifen. Auf dem Clientcomputer muss hierfür lediglich eine entsprechende weitere Terminalprotokollsoftware installiert sein, die eine Kommunikation mit dem als Server fungierenden Automatisierungsgerät über die IP Verbindung und ein Terminalprotokoll erlaubt.

Bekannte Verfahren, bei denen auf eine auf einem Automatisierungsgerät installierte Anwendersoftware über eine IP Verbindung mit Hilfe eines Clients zugegriffen wird, arbeiten mit webbasierten Techniken. Hierbei ist auf dem Automatisierungsgerät ein Webserver installiert, der beispielsweise eine von der Anwendersoftware erzeugte Ausgabe als Webseite (z.B. HTML) aufbereitet und diese auf einen entsprechenden Request des Clients hin an diesen sendet. Auf dem Client ist ein Webbrowser installiert, mit dem eine pixelgenaue grafische Aufbereitung der besagten Ausgabe der Anwendersoftware erzeugt werden kann. Eine derartige Vorgehensweise hat jedoch gegenüber dem erfindungsgemäßen Verfahren bzw. dem erfindungsgemäßen Automatisierungsgerät den Nachteil, dass die Anwendersoftware normalerweise modifiziert werden muss, um eine Datenaufbereitung in Form einer Webseite zu ermöglichen. Dies ist bei dem erfindungsgemäßen Automatisierungsgerät nicht der Fall. Weiterhin ist die Darstellung über einen Webclient typischerweise browserabhängig. Der Nachteil hierbei ist, dass das grafische Layout der vom Kern der Anwendersoftware erzeugten Daten von den Eigenschaften des Webbrowser abhängt. Somit kann die Darstellung der Daten je nach verwendetem Clientcomputer bzw. je nach dem, welcher Browser auf dem entsprechenden Computern installiert ist, unterschiedlich ausfallen. Es kann z. B. auch schlecht gezoomt werden. Auch dieser Nachteil wird durch die erfindungsgemäße Verwendung der Terminalprotokollsoftware vermieden, wobei trotzdem über eine IP Verbindung mit dem Clientcomputer auf das Automatisierungsgerät zugegriffen werden kann.

Der Anwenderzugriff über die IP Verbindung, die z.B. in Form von einer Ethernetverbindung oder einer Funkverbindung wie WLAN usw. realisiert sein kann, hat den Vorteil, dass die Übertragungsstrecke zwischen Client und Automatisierungsgerät sehr lang sein kann. Dies gilt insbesondere im Vergleich zu einer weiteren aus dem Stand der Technik bekannten Lösungsvariante, bei der ebenfalls die Anwendersoftware auf dem Automatisierungsgerät gespeichert ist und die vom Anwender benötigten Ein-/Ausgabegeräte direkt über Schnittstellen, wie beispielsweise eine VGA Schnittstelle zum Anschluss eines Bildschirms, direkt an das Automatisierungsgerät angeschlossen werden können. Insbesondere bei der Verwendung eines VGA Kabels darf das besagte Kabel eine maximale Länge nicht überschreiten. Auch geben derartige Schnittstellen die Eigenschaften der verwendeten Ein-/Ausgabegeräte sehr genau vor. Beispielsweise muss bei einer am Automatisierungsgerät vorhandenen VGA Schnittstelle selbstverständlich auch ein VGA Monitor als Ausgabegerät verwendet werden. Dies ist bei dem erfindungsgemäßen Automatisierungsgerät auf Grund der Möglichkeit, den Client über eine IP Verbindung an das Automatisierungsgerät anzukoppeln, nicht der Fall.

In vorteilhafter Ausgestaltung der Erfindung ist das Automatisierungsgerät als Speicherprogrammierbare Steuerung (SPS) ausgeführt. Bei einer derartigen Ausführungsform hat der Anwender die Möglichkeit, beispielsweise mit Hilfe des Clientcomputers auf Daten zuzugreifen, die von der SPS verwaltet werden.

Insbesondere aber nicht ausschließlich bei einer Ausführung des Automatisierungsgerätes als SPS ist eine weitere vorteilhafte Ausgestaltung der Erfindung dadurch gekennzeichnet, dass die Anwendersoftware als Projektierungssoftware zur Projektierung des Automatisierungsgerätes ausgeführt ist. Unter Projektierung ist in diesem Zusammenhang auch die Programmierung und Konfiguration des Automatisierungssystems zu verstehen. Die hierfür benötigte Projektierungssoftware muss also nicht mehr auf dem Clientcomputer, der in diesem Fall als Programmiergerät dient, installiert sein. Vielmehr kann ein derartiges Programmiergerät als Thin Client ausgeführt sein, auf dem neben den zur Ein-/Ausgabe benötigten Funktionen lediglich eine entsprechende Terminalprotokollsoftware installiert ist.

Eine weitere vorteilhafte Ausgestaltung der Erfindung ist dadurch gekennzeichnet, dass die Anwendersoftware als Bedien- und Beobachtungssoftware ausgeführt ist, mit der der Anwender auf Prozessdaten zugreifen kann, die vom Automatisierungsgerät verwaltet werden. Hierfür werden üblicherweise als Bedien- und Beobachtungsstationen dienende HMI Panels oder PCs eingesetzt, wobei durch die erfindungsgemäße Ablage der Anwendersoftware im ersten Speicherbereich des Automatisierungsgerätes und die Verwendung der Terminalprotokollsoftware auf eine Installation der Bedien- und Beobachtungssoftware auf den Client verzichtet werden kann. Dies ist insbesondere dann von Vorteil, wenn mehrere Clientcomputer für Bedien- und Beobachtungszwecke eingesetzt werden. In einem solchen Fall muss die Software nur einmal installiert werden, nämlich auf dem Automatisierungsgerät, wobei trotzdem verschiedene Geräte für die Benutzung der Bedien- und Beobachtungssoftware angewendet werden können.

In vorteilhafter Ausgestaltung der Erfindung ist die Anwendersoftware zur Erzeugung von für den Anwender zu visualisierenden Daten in einer direkt mittels einer Grafikkarte darstellbaren Form vorgesehen. Eine solche Ausführung der Anwendersoftware ist üblich, wenn sie direkt auf dem Clientcomputer installiert wird. Um eine solche Software nun statt auf dem Clientcomputer auf dem Automatisierungsgerät zu installieren, muss diese nicht modifiziert werden. Durch die Verwendung der Terminalprotokollsoftware ist es möglich, dass die pixelgenaue Aufbereitung der zu visualisierenden Daten direkt auf dem Automatisierungsgerät wie vorgesehen mit der Anwendersoftware geschieht und der Clientcomputer auf die so aufbereiteten Daten mittels eines Terminalprotokolls zugreifen kann. Auf dem Automatisierungsgerät ist somit eine Art in Software realisierte Grafikkarte implementiert.

Bei einer besonders vorteilhaften weiteren Ausgestaltung dieser Ausführungsform sind die zu visualisierenden Daten mit einer weiteren auf dem Clientcomputer installierten Anwendersoftware darstellbar. Beispielsweise kann es zweckmäßig sein, eine von der auf dem Automatisierungsgerät installierten Anwendersoftware erzeugte grafische Ausgabe in eine weitere Bildschirmausgabe, die von der weiteren Anwendersoftware erzeugt wird, einzubetten. Auf diese Art und Weise kann z.B. bei einem Automatisierungssystem eine Gesamtanlagenvisualisierung realisiert werden. Z.B. können Zustandswerte verschiedener an einem Automatisierungsprozess beteiligter speicherprogrammierbarer Steuerungen in einzelnen Teilfenstern eingeblendet werden.

Schließlich ist bei einer weiteren vorteilhaften Ausgestaltung des erfindungsgemäßen Automatisierungsgerätes die Terminalprotokollsoftware derart gestaltet, dass von verschiedenen Clients während einer gemeinsamen Session auf die Anwendersoftware zugegriffen werden kann, wobei insbesondere unterschiedliche Bildschirminhalte von den verschiedenen Clients anforderbar sind. Durch die Verwendung einer Terminaltechnologie ist es möglich, von verschiedenen Clients aus auf das Automatisierungsgerät bzw. auf die dort installierte Software zuzugreifen. Unterstützt die verwendete Terminalprotokollsoftware kein Sessionkonzept, wie es z.B. bei der von AT&T entwickelten Software Virtual Network Computing (VNC) der Fall ist, sehen die verschiedenen Anwender an den verschiedenen Clientcomputern alle die gleiche vom Automatisierungsgerät erzeugte Bildschirmausgabe. Eine Bedienung der Anwendersoftware kann nur von einem Anwender erfolgen. Ein solches Konzept ist in der Automatisierungstechnik insbesondere bei räumlich ausgedehnten Maschinen und Fertigungsstraßen vorteilhaft. Unterstützt hingegen die Terminalprotokollsoftware ein Sessionkonzept wie z.B. Microsoft Terminalserver, können die verschiedenen Anwender sogar unterschiedliche Bildschirminhalte anzeigen lassen.

Im Folgenden wird die Erfindung anhand der in den Figuren dargestellten Ausführungsbeispiele näher beschrieben und erläutert.

Es zeigen:
- FIG 1: eine schematische Darstellung eines ersten aus dem Stand der Technik bekannten Verfahrens zum Zugriff eines Anwenders auf eine auf einem Automatisierungsgerät gespeicherte Anwendersoftware,
- FIG 2: eine schematische Darstellung eines zweiten aus dem Stand der Technik bekannten Verfahrens zum Zugriff eines Anwenders auf eine auf einem Automatisierungsgerät gespeicherte Anwendersoftware und
- FIG 3: eine schematische Darstellung einer Ausführung des erfindungsgemäßen Verfahrens zum Zugriff eines Anwenders auf eine auf einem Automatisierungsgerät gespeicherte Anwendersoftware.

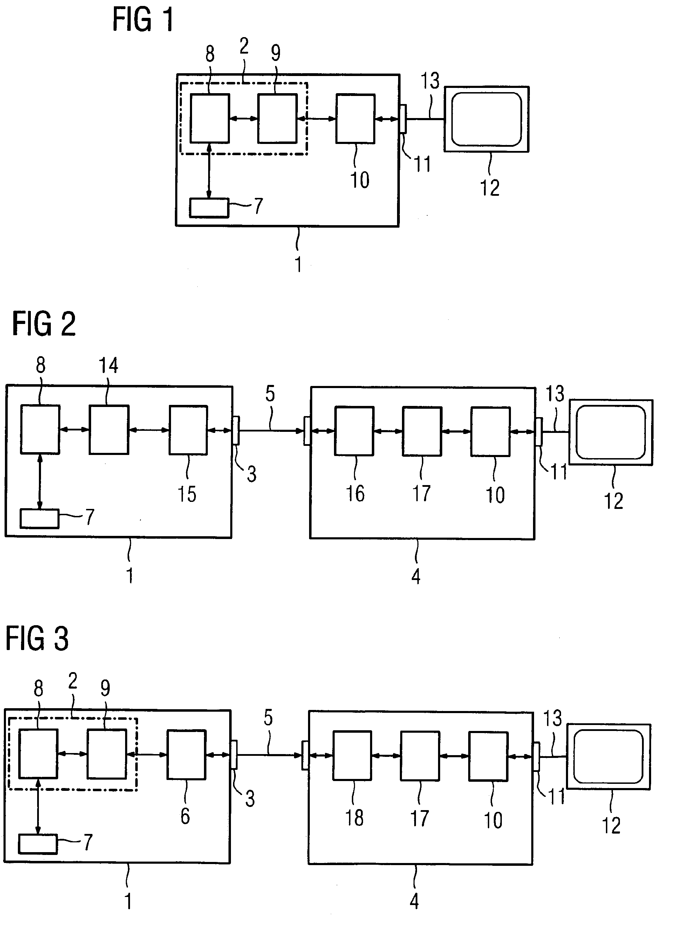

FIG 1 zeigt eine schematische Darstellung eines ersten aus dem Stand der Technik bekannten Verfahrens zum Zugriff eines Anwenders auf eine auf einem Automatisierungsgerät 1 gespeicherte Anwendersoftware 2. Ziel eines solchen Verfahrens ist es, die Anwendersoftware 2 nicht mehr auf einem eigens für den Anwenderzugriff vorgesehenen Gerät zu installieren, sondern zentral auf dem Automatisierungsgerät 1 selbst. Dies hat wie auch bei den weiteren hier dargestellten Ausführungsformen den Vorteil, dass für den Anwenderzugriff, der beispielsweise von einem Servicetechniker an einer zu wartenden Anlage durchgeführt werden soll, kein eigenes hierfür installiertes Gerät benötigt wird.

Bei der dargestellten Ausführungsform sei angenommen, dass die Anwendersoftware 2 zur Projektierung und/oder Visualisierung von Prozessdaten 7 vorgesehen ist, die von dem Automatisierungsgerät 1, bei dem es sich in dem Beispiel um eine Speicherprogrammierbare Steuerung handeln soll, verwaltet werden. Neben einem eigentlichen Kern 8 der Anwendersoftware 2 umfasst die Anwendersoftware 2 ein Modul 9 zur pixelgenauen grafischen Aufbereitung von Daten, die vom Kern 8 der Anwendersoftware 2 generiert werden. Diese so aufbereiteten Daten werden anschließend von einer Grafikkarte 10 über eine VGA Schnittstelle 11 an einen Bildschirm 12 ausgegeben. Um also in diesem Beispiel lesend auf die Anwendersoftware 2 zugreifen zu können, muss der Anwender lediglich den Bildschirm 12 über ein entsprechendes VGA Kabel 13 an die VGA Schnittstelle 11 des Automatisierungsgerätes 1 anschließen. In FIG 1 wie auch in den weiteren Ausführungsbeispielen ist hier lediglich der Anwenderzugriff gezeigt, der für eine Visualisierung von mittels des Anwenderprogramms 2 erzeugten Daten durchgeführt wird. Der Anwendungsfall der Benutzereingabe funktioniert analog.

Die dargestellte Ausführungsform hat den Nachteil, dass die VGA Schnittstelle 11 relativ starr das vom Anwender zu benutzende Endgerät vorgibt. Weiterhin ist bei der Verwendung der VGA Schnittstelle 11 die Kabellänge des VGA Kabels 13 begrenzt.

Diese genannten Nachteile werden bei der in FIG 2 dargestellten Ausführungsform umgangen. FIG 2 zeigt eine schematische Darstellung eines zweiten aus dem Stand der Technik bekannten Verfahrens zum Zugriff eines Anwenders auf eine auf einem Automatisierungsgerät 1 gespeicherte Anwendersoftware. Bei dieser Ausführungsform ist lediglich der Kern 8 der Anwendersoftware auf dem Automatisierungsgerät 1 installiert. Auf die pixelgenaue grafische Aufbereitung wird innerhalb des Automatisierungsgerätes 1 verzichtet. Hierfür muss im Allgemeinen die Anwendersoftware modifiziert werden. Stattdessen ist ein weiteres Softwaremodul 14 auf dem Automatisierungsgerät installiert, welches eine Aufbereitung der vom Kern 8 des Anwenderprogramms 2 generierten Daten als Webseite beispielsweise als HTML Seite leistet. Über einen Webserver 15 wird schließlich auf Anforderung eines Clientcomputers 4, der über eine IP Verbindung 5 an eine IP Schnittstelle 3 des Automatisierungsgerätes 1 angeschlossen ist, die erzeugte HTML Seite gesendet. Der Clientcomputer 4 umfasst zur Darstellung der Webseite einen Webbrowser 16. Optional ist es möglich, dass eine weitere Anwendersoftware 17 auf dem Clientcomputer 4 installiert ist, die eine Einbettung der auf dem Automatisierungsgerät 1 erzeugten grafischen Darstellung erlaubt. Schließlich wird mit Hilfe einer Grafikkarte 10 eine Bildschirmausgabe über einen an eine VGA Schnittstelle 11 des Clientcomputers angeschlossenen Bildschirm 12 erreicht.

Der Nachteil bei dieser Anordnung ist, dass das grafische Layout der vom Kern 8 der Anwendersoftware erzeugten Daten von den Eigenschaften des Webbrowser 16 abhängt. Somit kann die Darstellung der Daten je nach verwendetem Clientcomputer 4 bzw. je nach dem, welcher Browser auf dem entsprechenden Computern 4 installiert ist, unterschiedlich ausfallen.

Das in FIG 3 gezeigte Verfahren umgeht schließlich sowohl die unter FIG 1 als auch die unter FIG 2 genannten Nachteile. FIG 3 zeigt eine schematische Darstellung einer Ausführung des erfindungsgemäßen Verfahrens zum Zugriff eines Anwenders auf eine auf einem Automatisierungsgerät 1 gespeicherte Anwendersoftware 2. Die auf dem Automatisierungsgerät 1 gespeicherte Anwendersoftware 2 entspricht der bereits unter FIG 1 beschriebenen Anwendersoftware 2 und weist neben einem eigentlichen Kern 8 des Anwenderprogrammes auch ein Modul 9 zur pixelgenauen grafischen Aufbereitung der vom Kern 8 generierten Daten auf. Auch hier sei angenommen, dass die Anwendersoftware 2 eine Software zur Projektierung und/oder Visualisierung von Prozessdaten 7 darstellt, die von dem Automatisierungsgerät 1, welches auch hier als speicherprogrammierbare Steuerung ausgeführt ist, verwaltet werden.

Die Besonderheit des hier dargestellten Automatisierungsgerätes 1 ist, dass auf dem Automatisierungsgerät 1 eine Terminalprotokollsoftware 6 installiert ist. Diese erlaubt es einem Clientcomputer 4, auf dem eine weitere Terminalprotokollsoftware 18 installiert ist, über eine IP Verbindung 5 auf die Anwendersoftware 2 des Automatisierungsgerätes 2 zuzugreifen. Hierzu ist der Clientcomputer 4 über eine IP Schnittstelle 3 der speicherprogrammierbaren Steuerung 1 an die speicherprogrammierbare Steuerung 1 angeschlossen. Die Terminalprotokollsoftware 6 bzw. die weitere Terminalprotokollsoftware 18 ermöglichen nun, dass eine pixelgenaue Aufbereitung der vom Kern 8 der Anwendersoftware erzeugten Ausgabedaten mittels des Moduls 9 im Automatisierungsgerät 1 selbst möglich ist, wie auch bei der in FIG 1 gezeigten Ausführungsform. Darüber hinaus ist aber eine Kopplung des Clients 4 über eine IP Verbindung mit all den genannten Vorteilen und ohne Verwendung einer Webservertechnologie und der damit verbundenen Nachteile realisierbar.

Optional kann auf dem Clientcomputer 4 auch eine weitere Software 17 installiert sein, die z.B. eine Einbettung der von der auf dem Automatisierungsgerät 1 installierten Anwendersoftware 2 in eine andere Darstellung ermöglicht. Beispielsweise kann mit Hilfe der weiteren Anwendersoftware 17 eine Gesamtvisualisierung eines Automatisierungssystems erzeugt werden, bei dem mehrere speicherprogrammierbare Steuerungen an einem Automatisierungsprozess beteiligt sind.

## Patentansprüche

1. Automatisierungsgerät (1) mit
- einem ersten Speicherbereich für mindestens eine Anwendersoftware (2),
- einer IP Schnittstelle (3) zum Anschluss mindestens eines Clientcomputers (4) an das Automatisierungsgerät (1) über eine IP Verbindung (5) und
- einem zweiten Speicherbereich für eine Terminalprotokollsoftware (6), durch die die mindestens eine Anwendersoftware (2) von einem Anwender mittels des Clientcomputers (4) zugreifbar ist.

2. Automatisierungsgerät (1) nach Anspruch 1,
wobei das Automatisierungsgerät (1) als Speicherprogrammierbare Steuerung ausgeführt ist.

3. Automatisierungsgerät nach einem der Ansprüche 1 oder 2,
wobei die Anwendersoftware als Projektierungssoftware zur Projektierung des Automatisierungsgerätes ausgeführt ist.

4. Automatisierungsgerät (1) nach einem der vorhergehenden Ansprüche,
wobei die Anwendersoftware (2) als Bedien- und Beobachtungssoftware ausgeführt ist, mit der der Anwender auf Prozessdaten (7) zugreifen kann, die vom Automatisierungsgerät (1) verwaltet werden.

5. Automatisierungsgerät (1) nach einem der vorhergehenden Ansprüche,
wobei die Anwendersoftware (2) zur Erzeugung von für den Anwender zu visualisierenden Daten in einer direkt mittels einer Grafikkarte (10) darstellbaren Form vorgesehen ist.

6. Automatisierungsgerät (1) nach Anspruch 5,
wobei die zu visualisierenden Daten mit einer weiteren auf dem Clientcomputer (4) installierten Anwendersoftware (17) darstellbar sind.

7. Automatisierungsgerät (1) nach einem der vorhergehenden Ansprüche,
wobei die Terminalprotokollsoftware (6) derart gestaltet ist, dass von verschiedenen Clients während einer gemeinsamen Session auf die Anwendersoftware (2) zugegriffen werden kann,
wobei insbesondere unterschiedliche Bildschirminhalte von den verschiedenen Clients anforderbar sind.

8. Verfahren zum Zugriff auf eine auf einem Automatisierungsgerät (1) gespeicherte Anwendersoftware (2) mittels eines an eine IP Schnittstelle (3) des Automatisierungsgerätes (1) angeschlossenen Clientcomputers (4), bei dem ein Anwender unter Verwendung einer auf dem Automatisierungsgerät (1) installierten Terminalprotokollsoftware (6) und einer auf dem Client (4) installierten weiteren Terminalprotokollsoftware (16) auf die Anwendersoftware (2) zugreift.

9. Verfahren nach Anspruch 8,
wobei das Automatisierungsgerät (1) als Speicherprogrammierbare Steuerung ausgeführt ist.

10. Verfahren nach einem der Ansprüche 8 oder 9,
wobei die Anwendersoftware als Projektierungssoftware zur Projektierung des Automatisierungsgerätes ausgeführt ist.

11. Verfahren nach einem der Ansprüche 8 bis 10,
wobei die Anwendersoftware (2) als Bedien- und Beobachtungssoftware ausgeführt ist, mit der der Anwender auf Prozessdaten (7) zugreift, die vom Automatisierungsgerät (1) verwaltet werden.

12. Verfahren nach einem der Ansprüche 8 bis 11,
wobei mit der Anwendersoftware (2) für den Anwender zu visualisierenden Daten in einer direkt mittels einer Grafikkarte (10) darstellbaren Form erzeugt werden.

13. Verfahren nach Anspruch 12,
wobei die zu visualisierenden Daten mit einer weiteren auf dem Clientcomputer (4) installierten Anwendersoftware (17) dargestellt werden.

14. Verfahren nach einem der Ansprüche 8 bis 13,
wobei von verschiedenen Clients während einer gemeinsamen Session auf die Anwendersoftware (2) mittels der Terminalprotokollsoftware (6) zugegriffen wird, wobei insbesondere unterschiedliche Bildschirminhalte von den verschiedenen Clients angefordert werden.
